Europäisches Patentamt

European Patent Office

Office européen des brevets

(19)

(11) **EP 1 413 140 B1**

(12) ## FASCICULE DE BREVET EUROPEEN

(45) Date de publication et mention
de la délivrance du brevet:
**27.09.2006 Bulletin 2006/39**

(21) Numéro de dépôt: **00988902.3**

(22) Date de dépôt: **07.12.2000**

(51) Int Cl.:
***H04N 7/26*** (2006.01)

(86) Numéro de dépôt international:
**PCT/FR2000/003441**

(87) Numéro de publication internationale:
**WO 2001/043446 (14.06.2001 Gazette 2001/24)**

(54) **PROCEDE D'ESTIMATION DE MOUVEMENT ENTRE DEUX IMAGES AVEC GESTION DES RETOURNEMENTS DE MAILLES ET PROCEDE DE CODAGE CORRESPONDANT**

VERFAHREN ZUR BEWEGUNGSSCHÄTZUNG ZWISCHEN ZWEI BILDERN MIT VERWALTUNG DER WENDUNG EINER MASCHE UND ENTSPRECHENDES KODIERUNGSVERFAHREN

METHOD FOR ESTIMATING THE MOTION BETWEEN TWO IMAGES WITH MANAGEMENT OF MESH OVERTURNING, AND CORRESPONDING CODING METHOD

(84) Etats contractants désignés:
**AT BE CH CY DE DK ES FI FR GB GR IE IT LI LU MC NL PT SE TR**

(30) Priorité: **09.12.1999 FR 9915568**

(43) Date de publication de la demande:
**28.04.2004 Bulletin 2004/18**

(73) Titulaires:
• **FRANCE TELECOM**
**75015 Paris (FR)**
• **TELEDIFFUSION DE FRANCE, société anonyme**
**75015 Paris (FR)**

(72) Inventeur: **LAURENT-CHATENET, Nathalie**
**F-35630 Vignoc (FR)**

(74) Mandataire: **Ballot, Paul Denis Jacques**
**Cabinet Ballot**
**4 rue Général Hoche**
**56100 Lorient (FR)**

(56) Documents cités:
**FR-A- 2 783 123**

• **LECHAT P ET AL: "SCALABLE IMAGE CODING WITH FINE GRANULARITY BASED ON HIERARCHICAL MESH" PROCEEDINGS OF THE SPIE, janvier 1999 (1999-01), XP000862993**

• **LAURENT N ET AL: "Limitation of triangles overlapping in mesh-based motion estimation using augmented Lagrangian" PROCEEDINGS 1998 INTERNATIONAL CONFERENCE ON IMAGE PROCESSING. ICIP98 (CAT. NO.98CB36269), PROCEEDINGS OF IPCIP'98 INTERNATIONAL CONFERENCE ON IMAGE PROCESSING, CHICAGO, IL, USA, 4-7 OCT. 1998, pages 223-227 vol.2, XP002144676 1998, Los Alamitos, CA, USA, IEEE Comput. Soc, USA ISBN: 0-8186-8821-1**
• **CHOU Y -M ET AL: "OVERLAPPED PATCH ELIMINATION ALGORITHM FOR DEFORMABLE MESH VIDEO CODING" ELECTRONICS LETTERS,GB,IEE STEVENAGE, vol. 33, no. 13, 19 juin 1997 (1997-06-19), pages 1133-1134, XP000734120 ISSN: 0013-5194**
• **DUDON M ET AL: "Triangular active mesh for motion estimation" SIGNAL PROCESSING. IMAGE COMMUNICATION,NL,ELSEVIER SCIENCE PUBLISHERS, AMSTERDAM, vol. 10, no. 1-3, 1 juillet 1997 (1997-07-01), pages 21-41, XP004082700 ISSN: 0923-5965**
• **WANG Y ET AL: "USE OF TWO-DIMENSIONAL DEFORMABLE MESH STRUCTURES FOR VIDEO CODING.ÖPART I--THE SYNTHESIS PROBLEM: MESH-BASED FUNCTION APPROXIMATION AND MAPPING" IEEE TRANSACTIONS ON CIRCUITS AND SYSTEMS FOR VIDEO TECHNOLOGY,US,IEEE INC. NEW YORK, vol. 6, no. 6, 1 décembre 1996 (1996-12-01), pages 636-646, XP000641036 ISSN: 1051-8215**

## Description

La présente invention concerne un procédé d'estimation de mouvement entre deux images numériques et une application de ce procédé pour le codage d'images.

Le mouvement entre deux images, $I_1$ et $I_2$, se définit généralement sous la forme d'un champ de mouvement associé à l'une ou l'autre des images $I_1$, $I_2$ et constitué de vecteurs déplacement se rapportant chacun à un point de l'image concernée. Le vecteur déplacement est un vecteur à deux dimensions représentatif de la différence de position entre le pixel de l'image $I_1$ et le pixel associé de l'image $I_2$ se rapportant au même point physique de la scène filmée.

L'invention est applicable dans tous les domaines de l'imagerie nécessitant une analyse des mouvements ou des disparités entre deux images. Ce procédé peut également faire l'objet d'application au suivi d'objets dans les vidéos (à des fins notamment de création et d'annotation de contenus par les objets dans un contexte de normalisation MPEG4 et 7).

Pour obtenir un champ de mouvement, il est connu de décomposer l'image en éléments finis. Ces éléments finis qui peuvent être par exemple des triangles ou des quadrangles, sont déterminés par un maillage dont les noeuds correspondent aux sommets des éléments finis. Un vecteur déplacement est calculé pour chaque noeud du maillage. Puis, par le biais d'une fonction d'interpolation, on peut en déduire un vecteur déplacement pour chaque point de l'image considérée. Le champ de mouvement est ainsi déterminé par le modèle d'éléments finis retenu, lequel définit le maillage utilisé pour partitionner l'image en éléments finis et la fonction d'interpolation permettant de calculer le vecteur déplacement en tout point de l'image.

Le maillage utilisé peut être régulier ou non et doit être choisi suffisamment dense pour modéliser au mieux le mouvement entre les deux images sans toutefois nécessiter une quantité de calculs ou de données à transmettre trop importante.

Le calcul des vecteurs déplacement des noeuds du maillage peut être effectué selon diverses méthodes. Il existe tout d'abord les méthodes dites de mise en correspondance, ou "matching", consistant à tester un ensemble discret de valeurs possibles de vecteurs déplacement pour chaque noeud du maillage et à retenir les meilleurs vecteurs selon un critère donné. Une seconde méthode dite par transformée consiste à utiliser les propriétés de la transformée de Fourier et de ses extensions afin de convertir le mouvement en un déphasage dans l'espace transformé. Enfin, il existe une troisième méthode dite différentielle permettant de déterminer les vecteurs déplacement par optimisation d'un critère mathématique (par exemple, par optimisation d'une erreur quadratique entre l'image et sa valeur prédite avec le champ de mouvement). Cette méthode est la plus utilisée pour l'estimation de mouvement avec modélisation par éléments finis. Une méthode différentielle classique pour l'optimisation des vecteurs déplacement est la méthode de Gauss-Newton. La présente demande concerne plus particulièrement la famille de procédé d'estimation de mouvement utilisant un modèle d'éléments finis et une méthode différentielle par optimisation d'une erreur de prédiction pour déterminer le champ de mouvement.

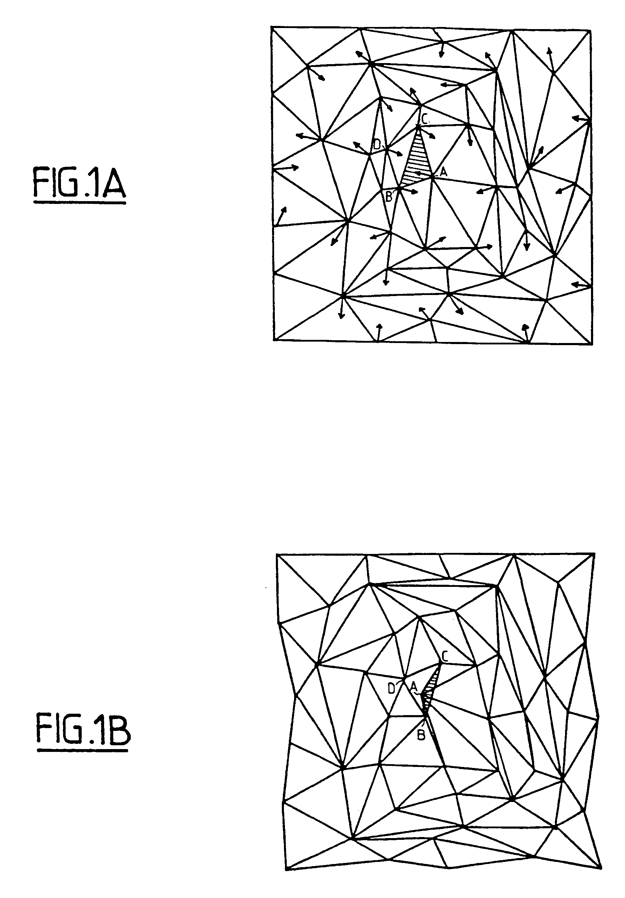

Bien que très répandu, ce type de procédé présente cependant un inconvénient majeur. Sous l'effet du champ des vecteurs déplacement des noeuds du maillage, le maillage initial sur l'image de départ se transforme en un nouveau maillage sur l'autre image. Il peut alors se produire des retournements de mailles. En effet, le maillage déformable utilisé pour partitionner l'image définit une représentation continue d'un champ de mouvement alors que le mouvement réel de la scène filmée est de nature discontinue. Différents éléments de la scène peuvent apparaître ou disparaître d'une image à l'autre, générant alors des discontinuités. Cela se traduit au niveau du maillage par un étirement ou un retournement ou un chevauchement de mailles du modèle. Un exemple de retournement et de chevauchement de mailles est illustré par les figures 1A et 1B. La figure 1A montre un maillage triangulaire déformable avant application de vecteurs déplacement aux noeuds de ce maillage et la figure 1B montre le même maillage après application desdits vecteurs déplacement. Quatre noeuds référencés A, B, C et D sont indiqués sur ces figures. Ces noeuds constituent les sommets de deux triangles notés ABC et BCD. Le triangle ABC est hachuré sur les deux figures. On constate que, après application des vecteurs déplacement (figure 1B), le triangle ABC s'est retourné et que tous les triangles ayant pour sommet le noeud A viennent recouvrir le triangle BCD, détruisant ainsi la propriété de continuité que doit vérifier tout maillage. Ce chevauchement de mailles provoque alors une dégradation visuelle. Un but de l'invention est d'éliminer la dégradation visuelle.

Il existe actuellement deux techniques pour résoudre ces problèmes de retournement de mailles: une technique dite de "post-traitement" et la technique consistant à mettre en place des contraintes de non-retournement lors de l'estimation de mouvement.

La technique dite de "post-traitement" peut être mise en oeuvre selon deux scénarios possibles : le premier scénario correspondant à une correction a posteriori consiste à appliquer tels quels les vecteurs déplacement calculés, à détecter les vecteurs déplacement en défaut puis à corriger leur valeur de manière à inhiber les retournements; le second scénario consiste à procéder itérativement en appliquant à chaque itération une partie du déplacement escompté aux noeuds de manière à ce qu'il n'y ait pas de retournement et en bouclant ainsi jusqu'à convergence du processus. Cependant, étant donné que les méthodes de post-traitement agissent une fois l'estimation de mouvement réalisée, le résultat est sous optimal car les vecteurs déplacement sont corrigés indépendamment de leur contribution globale à la minimisation de l'erreur de prédiction.

Une autre solution consiste à optimiser le champ de mouvement en intégrant des contraintes de non retournement des triangles au cours de l'estimation des vecteurs déplacement. On modifie l'estimation de mouvement en ajoutant à l'erreur quadratique de prédiction un lagrangien augmenté permettant de corriger la déformation des triangles lorsque ceux-ci s'approchent du triangle d'aire nulle. Cette technique est décrite dans l'article intitulé "Limitation of triangles overlapping in mesh-based motion estimation using augmented lagragian" International Conference Image Processing, Chicago, Octobre 1998. Cette dernière technique permettrait effectivement de déterminer la solution optimale au problème si le champ de mouvement était continu, ce qui n'est pas le cas.

La solution adoptée par l'invention pour résoudre le problème des retournements de maillages consiste à réaliser une première estimation de mouvement pour repérer les mailles en défaut, c'est-à-dire les mailles se retournant ou se chevauchant après application des vecteurs déplacement, puis à réaliser une seconde estimation de mouvement en excluant au moins lesdites mailles en défaut afin de minimiser l'erreur de prédiction sur les autres mailles du modèle.

Aussi, l'invention a pour objet un procédé d'estimation du mouvement entre deux images numériques, $I_1$ et $I_2$, de luminance $Y_1$ et $Y_2$, destiné à générer, pour chaque point de coordonnées x,y de l'image $I_2$ un vecteur déplacement

$$\vec{d}(x, y = (d_x, d_y)$$ de manière à former une image $\hat{I}_2$ à partir de l'image $I_1$, de luminance $\hat{Y}_2(x, y = Y_1 (x+d_x,$

$y+d_y)$, qui soit une approximation de l'image $I_2$, comportant les étapes suivantes:

(a) - définir un modèle d'éléments finis initial comportant un maillage dont les noeuds sont des points de l'image $I_1$, un vecteur déplacement à chaque noeud dudit maillage, et une formule d'interpolation pour calculer la valeur du vecteur déplacement de chaque point de l'image $I_1$ à partir des valeurs des vecteurs déplacements des noeuds de la maille à laquelle il appartient,

(b) - optimiser de manière globale les valeurs de l'ensemble des vecteurs déplacement du modèle selon une méthode différentielle,

(c) - appliquer lesdits vecteurs déplacement audit maillage du modèle initial de manière à générer un maillage déplacé représentatif de l'image $\hat{I}_2$,

(d) - déterminer des zones de défaut dans ledit maillage déplacé, lesquelles zones de défaut sont déterminées de telle manière qu'elles renferment chacune au moins une ou plusieurs mailles se retournant ou se chevauchant après application des vecteurs déplacement, l'ensemble desdites mailles du maillage déplacé se retournant ou se chevauchant après application des vecteurs déplacement étant renfermées dans lesdites zones de défaut;

(e) - créer un ensemble S regroupant l'ensemble des noeuds du maillage déplacé contenus dans les zones de défaut,

(f) - reprendre le modèle initial défini à l'étape (a), réinitialiser les valeurs de l'ensemble des vecteurs déplacements dudit modèle initial et réoptimiser les valeurs des vecteurs déplacement dudit modèle selon l'étape (b) en excluant du modèle les vecteurs déplacement des noeuds dudit ensemble S.

Cette double optimisation des vecteurs déplacement permet de déterminer les vecteurs de mouvement optimaux pour la zone continue (la zone admettant une bijection entre l'image $I_1$ et l'image $I_2$) du maillage et de supprimer les perturbations occasionnées par les vecteurs déplacement des zones de défaut.

En variante, on peut prévoir d'effectuer la réoptimisation des vecteurs déplacement de l'étape (f) en reprenant non pas le modèle initial, mais un modèle correspondant au modèle obtenu à l'issue d'une itération de l'optimisation réalisée à l'étape (b) pour laquelle les vecteurs déplacement optimisés n'engendrent pas de retournement de mailles et cela afin de diminuer le temps de traitement de l'étape (f).

On peut également prévoir un modèle d'éléments finis comportant un maillage hiérarchique. Dans ce cas, l'invention a pour objet un procédé d'estimation du mouvement entre deux images numériques, $I_1$ wet $I_2$, de luminance $Y_1$ et $Y_2$, destiné à générer, pour chaque point de coordonnées x,y de l'image $I_2$ un vecteur déplacement

$$\vec{d}(x, y = (d_x, d_y)$$ de manière à former une image $\hat{I}_2$ à partir de l'image $I_1$, de luminance $\hat{Y}_2(X, y = Y_1 (x+d_x,$

$y+d_y)$, qui soit une approximation de l'image $I_2$, comportant les étapes suivantes:

(a) - définir un modèle d'éléments finis initial comportant un maillage hiérarchique dont les noeuds sont des points de l'image $I_1$, ledit maillage hiérarchique comportant N+1 niveaux de maillage (0...N) et chaque noeud dudit maillage appartenant à au moins un niveau de maillage, un vecteur déplacement à chaque noeud dudit maillage hiérarchique, et une formule d'interpolation pour calculer la valeur du vecteur déplacement de chaque point de l'image $I_1$ à partir des valeurs des vecteurs déplacement des noeuds de la maille à laquelle il appartient,

(b) - optimiser de manière globale, niveau de maillage par niveau de maillage, les valeurs de l'ensemble des vecteurs

EP 1 413 140 B1

déplacement du modèle selon une méthode différentielle en partant du niveau de maillage le plus grossier (niveau 0) et en s'appuyant à chaque niveau sur les valeurs optimisées du niveau de maillage inférieur,

(c) - appliquer lesdits vecteurs déplacement audit maillage hiérarchique du modèle initial de manière à générer un maillage déplacé représentatif de l'image $\hat{I}_2$.

(d)- déterminer des zones de défaut à chaque niveau de maillage du maillage déplacé, lesquelles zones de défaut sont déterminées de telle manière qu'elles renferment chacune au moins une ou plusieurs mailles se retournant ou se chevauchant après application des vecteurs déplacement, l'ensemble desdites mailles dudit maillage hiérarchique se retournant ou se chevauchant après application des vecteurs déplacement étant renfermées dans lesdites zones de défaut, les zones de défaut du maillage de niveau de maillage i comprenant au moins les zones de défaut du maillage de niveau de maillage i-1;

(e) - créer un ensemble $S_i$ pour chaque niveau de maillage i, lequel ensemble $S_i$ regroupe l'ensemble des noeuds du niveau de maillage i du maillage déplacé contenus dans les zones de défaut,

(f) - reprendre le modèle initial défini à l'étape (a), réinitialiser les valeurs de l'ensemble des vecteurs déplacement dudit modèle initial et réoptimiser les valeurs des vecteurs déplacement dudit modèle selon l'étape (b) en excluant à chaque niveau de maillage i du modèle les vecteurs déplacement des noeuds de l'ensemble $S_i$ correspondant.

La mise en oeuvre de ce procédé au sein d'une séquence d'images vidéo permet de gérer les disparitions d'objets (retournements de mailles) entre images consécutives de la séquence en prenant $I_2$ consécutive à $I_1$. Les apparitions d'objets entre images consécutives de séquence peuvent également être gérées en prenant $I_1$ consécutive à $I_2$.

Enfin, l'invention a pour objet un procédé de codage d'une séquence d'images numériques visant à produire un train binaire représentatif de ladite séquence d'images, caractérisé en ce qu'il comporte les étapes suivantes:

- effectuer une estimation de mouvement pour chaque couple d'images consécutives de la séquence en mettant en oeuvre le procédé d'estimation de mouvement indiqué précédemment, l'estimation de mouvement pouvant être avant ou arrière, et
- introduire dans le train binaire des données pour décrire la première image de ladite séquence, des données sur la structure du maillage employé pour l'étape d'estimation de mouvement, les vecteurs déplacements obtenus à l'issue de ladite étape d'estimation de mouvement et des données de défaut pour décrire les zones de défaut déterminées au cours de l'étape d'estimation de mouvement.

L'invention concerne également un procédé de codage d'une séquence d'images numériques visant à produire un train binaire représentatif de ladite séquence d'images, caractérisé en ce qu'il comporte les étapes suivantes:

- effectuer, pour chaque couple d'images consécutives de la séquence, une estimation de mouvement avant et une estimation de mouvement arrière en mettant en oeuvre pour chacune des estimations de mouvement le procédé d'estimation de mouvement de l'invention, et
- introduire dans le train binaire des données pour décrire la première image de ladite séquence d'images, des données sur la structure du maillage employé pour l'étape d'estimation de mouvement, des vecteurs déplacement qui soient pour chaque image une combinaison linéaire des vecteurs déplacement obtenus à l'issue des deux étapes d'estimation de mouvement précédentes et des données de défaut pour représenter les zones de défaut déterminées au cours des deux étapes d'estimation de mouvement précédentes.

Avantageusement, le train binaire comporte en outre un bit indiquant si l'étape d'estimation de mouvement de chacune des images a détecté des zones de défaut dans le maillage.

D'autres caractéristiques et avantages de l'invention apparaîtront à la lecture de description détaillée qui suit et qui est faite en référence aux dessins annexés, parmi lesquels :

- la figure 1A, déjà décrite, représente un maillage sur l'image $I_1$ et les vecteurs déplacements associés aux noeuds de ce maillage permettant de générer l'image $I_2$;
- la figure 1B, déjà décrite, montre le maillage de la figure 1A après application des vecteurs déplacement;
- la figure 2 représente un premier mode de réalisation du procédé de l'invention,
- la figure 3 montre une zone de retournement et une zone de défaut dans le maillage de la figure 1A, et
- la figure 4 représente un second mode de réalisation du procédé de l'invention.

On considère deux images numériques $I_1$ et $I_2$ appartenant à une même séquence vidéo et de luminances respectives $Y_1$ et $Y_2$. Le procédé de l'invention consiste à réaliser une première estimation de mouvement pour générer,

4

à chaque point P de coordonnées (x,y) de l'image $I_2$, un vecteur déplacement $\vec{d}(x,y) = (d_x, d_y)$. Ce vecteur est défini comme étant le vecteur permettant de construire à partir de l'image $I_1$, une image $\hat{I}_2$ de luminance $\hat{Y}_2(x,y) = Y_1(x+d_x, y+d_y)$ qui soit une approximation de $I_2$. Les déplacements sont ainsi définis de l'image $I_1$ vers l'image $I_2$. Un point de coordonnées (x,y) dans l'image $I_1$ a pour coordonnées $(x+d_x, y+d_y)$ dans l'image $I_2$.

Dans la suite de la description, on parle d'estimation de mouvement avant entre les images $I_1$ et $I_2$ lorsque, l'image $I_2$ étant consécutive à l'image $I_1$ dans la séquence d'images, on estime le mouvement dans le sens $I_1$ vers $I_2$. On parle d'estimation de mouvement arrière lorsqu'on estime le mouvement dans le sens $I_2$ vers $I_1$.

Le champ de mouvement recherché est défini par un modèle d'éléments finis. Dans la suite de l'exposé, on considère que les éléments finis sont des triangles sans qu'on puisse y voir une limitation de la portée de la présente demande à cette forme d'éléments finis. Le modèle d'éléments finis comporte par conséquent un maillage triangulaire, des vecteurs déplacement définis aux noeuds du maillage, lesquels noeuds correspondent aux sommets des triangles, et une formule d'interpolation pour calculer le vecteur déplacement des points à l'intérieur des triangles.

La formule d'interpolation utilisée pour calculer le champ de mouvement en tout point du domaine de l'image $I_2$ est la suivante:

si on considère le point P de coordonnées (x,y) dans l'image $I_2$ appartenant au triangle e de sommets $P_i$, $P_j$ et $P_k$ de coordonnées respectives $(x_i, y_i)$, $(x_j, y_j)$ et $(x_k, y_k)$, son vecteur déplacement est égal à

$$\vec{d}(x,y) = \sum_{l=i,j,k} \psi_l^e(x,y) \cdot \vec{d}(x_l, y_l)$$

où $\psi_l^e$ représente une fonction de base associée au triangle e.

Dans le cas d'une interpolation affine, les $\psi_l^e(x,y)$ représentent les coordonnées barycentriques du point P dans le triangle e de sommets $P_i$, $P_j$, $P_k$. Ces fonctions sont définies par la relation suivante :

$$\begin{cases} \psi_l^e(x,y) = \alpha_l + \beta_l x + \gamma_l y & (x,y) \in e \\ \sum_{l=i,j,k} \psi_l^e(x,y) = 1 & \text{et } \alpha_l, \beta_l, \gamma_l \in \Re \\ \psi_l^e(x,y) = 0 & (x,y) \notin e \end{cases}$$

soit

$$\psi_i^e(x,y) = \frac{x_j y_k - x_k y_j + (y_j - y_k)x + (x_k - x_j)y}{x_j y_k - x_k y_j + x_k y_i - x_i y_k + x_i y_j - x_j y_k}$$

Les fonctions affines $\psi_j^e(x,y)$ et $\psi_k^e(x,y)$ se déduisent de la fonction $\psi_i^e(x,y)$ en permutant circulairement les indices i,j,k. On peut également utiliser des modèles d'éléments finis plus évolués, les fonctions $\psi$ pouvant alors être étendues à des polynomes de degré n≥2 mais la formule d'interpolation des vecteurs déplacement fait alors intervenir des dérivées premières, secondes... Un choix divers de modèles d'éléments finis est proposé dans l'ouvrage "Handbook of Numerical Analysis" de P.G Ciarlet et J.L Lions, Volume 2, pp 59-99, Ed. North Holland.

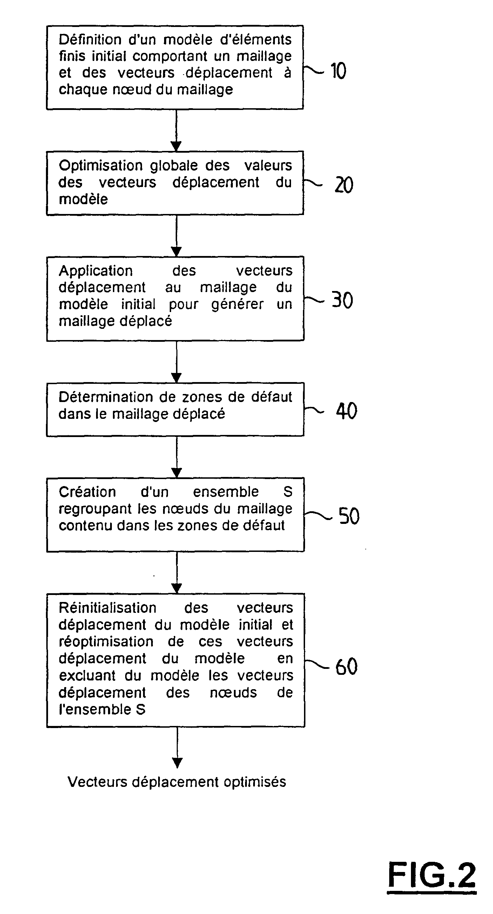

Selon un premier mode de réalisation illustré à la figure 2, le procédé d'estimation de mouvement se rapporte à un modèle d'éléments finis comprenant un maillage non hiérarchique.

Selon une première étape 10, on définit un modèle d'éléments finis initial en sélectionnant des points de l'image $I_1$ selon un maillage triangulaire initial. Ce maillage peut être défini de manière quelconque, par exemple en fonction des besoins de l'application ou de connaissances préalables ou du mouvement déjà calculé entre deux images précédentes de la même séquence vidéo. Un vecteur déplacement de valeur nulle est alors associé à chaque noeud du maillage. La formule d'interpolation définie précédemment est également une donnée du modèle initial.

Selon une deuxième étape 20, on optimise la valeur des vecteurs déplacement du modèle selon une méthode différentielle, par exemple la méthode de Gauss-Newton ou son extension de Marquardt décrite dans la thèse intitulée "Représentation et codage de séquences vidéo par maillages 2D déformables" de Patrick Lechat, page 162, IRISA, Rennes, Octobre 1999. Cette méthode consiste à rechercher l'ensemble des vecteurs déplacement nodaux qui minimisent l'erreur de prédiction entre les images $\hat{I}_2$ et $I_2$. Cette erreur de prédiction est définie par :

$$E = \sum_{(x,y) \in D} \mathrm{DFD}^2(x, y)$$

avec

$$\mathrm{DFD}(x, y) = Y_2(x, y) - Y_1\left(x + d_x, y + d_y\right)$$

où D est le domaine des images $I_1$ et $I_2$.

Avantageusement, un raffinement local du maillage par division des triangles est ensuite effectué lorsque l'erreur de prédiction E sur certains triangles du maillage entre l'image $\hat{I}_2$ et l'image $I_2$ est trop élevée. Pour ce faire, on calcule l'écart E entre l'image $\hat{I}_2$ et l'image $I_2$ sur chaque triangle du maillage et on divise ce triangle si cet écart est supérieur à une valeur seuil. On réoptimise alors la valeur des vecteurs déplacement à partir de ce nouveau maillage en répétant l'étape d'optimisation précédente. On répète ainsi cette suite d'étapes (optimisation des vecteurs déplacement, calcul de E pour chaque triangle, division des triangles) jusqu'à satisfaire un critère d'arrêt. Ce critère d'arrêt est par exemple un nombre prédéterminé de triangles à atteindre au terme de l'étape d'affinage local. On peut également prévoir d'arrêter le procédé lorsque les écarts E de l'ensemble des triangles sont inférieurs à un écart seuil.

A l'issue de cette première estimation de mouvement, on obtient alors un modèle tel que représenté à la figure 1A avec un maillage déterminé et des vecteurs déplacement pour chaque noeud de ce maillage. Après application des vecteurs déplacement aux noeuds du maillage (figure 1B), certains triangles du maillage se retournent et d'autres se chevauchent. Cette étape d'application est référencée 30 sur le schéma de la figure 2. Dans l'exemple de la figure 1B, le triangle ABC se retourne et les triangles ayant pour sommet le noeud A viennent recouvrir en partie le triangle BCD.

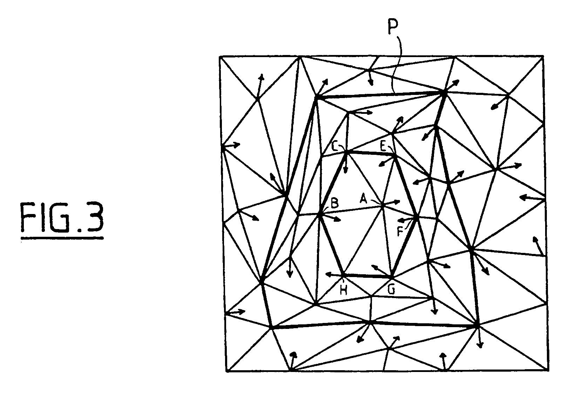

Selon l'invention, on détermine alors des zones de retournement dans le maillage du modèle à une étape 40. Ces zones sont constituées des triangles qui, après application des vecteurs déplacement, soit se retournent, soient viennent recouvrir d'autres triangles. Le maillage de la figure 1A comporte une zone de retournement qui est montrée à la figure 3 et qui comprend tous les triangles ayant pour sommet le noeud A. Cette zone est délimitée par l'hexagone BCEFGH.

Selon l'invention, on crée alors un ensemble S comprenant l'ensemble des noeuds appartenant aux zones de retournement du maillage (étape référencée 50 sur la figure 2). Dans l'exemple de la figure 3, l'ensemble S comprend les noeuds A, B, C, E, F, G et H.

Avantageusement, l'ensemble S est élargi aux noeuds périphériques de la zone de retournement afin d'éviter tout risque de retournement des triangles périphériques à la zone de retournement lors d'un traitement ultérieur du maillage (par exemple une nouvelle optimisation des vecteurs déplacement). On définit alors une zone appelée zone de défaut englobant la zone de retournement. On prend par exemple le k-disque de la zone de retournement considérée. Une zone de défaut représentant le 2-disque de l'hexagone BCEFGH est montrée sur la figure 3. Cette zone de défaut est délimitée par le polygone P dessiné en trait gras sur la figure.

A une étape suivante référencée 60 sur la figure 2, on réinitialise alors l'ensemble des vecteurs déplacement du modèle initial, c'est-à-dire l'ensemble des vecteurs déplacement des noeuds du maillage de la figure 1A et on réoptimise les valeurs de ces vecteurs déplacement en excluant du modèle les vecteurs déplacement des noeuds de l'ensemble S et cela en réappliquant la méthode de Gauss Newton.

Les vecteurs déplacement obtenus en fin de procédé sont optimaux pour la zone continue du maillage car la perturbation engendrée par les zones de défaut a été supprimée.

En variante, on peut prévoir d'effectuer la réoptimisation des vecteurs déplacement de l'étape (f) en reprenant non pas le modèle initial, mais un modèle correspondant au modèle obtenu à l'issue d'une itération de l'optimisation réalisée à l'étape (b) pour laquelle les vecteurs déplacement n'engendrent pas de retournement de mailles. Cela permet ainsi de diminuer le temps de traitement de l'étape (f).

Le mouvement des noeuds des zones de défaut de l'image $I_2$ n'est pas estimé par rapport à l'image $I_1$ puisque ces zones correspondent à une partie de l'image $I_2$ qui n'est pas présente dans l'image $I_1$.

Par ailleurs, il se peut que l'absence de certains noeuds dans le maillage crée des dégénérescences qui engendrent des problèmes de conditionnement matriciel au moment de l'optimisation des vecteurs déplacement. Aussi, afin d'éviter ces problèmes de conditionnement matriciel et afin d'accélérer la convergence de la méthode de Gauss-Newton, on peut prévoir d'appliquer la seconde étape d'optimisation à l'ensemble des noeuds du maillage en supposant préalablement que la différence de luminance entre les images $I_1$ et $I_2$ pour les zones de défaut est nulle.

En variante, on peut également prévoir de corriger la position des noeuds des zones de défaut du maillage afin de limiter les risques de dégénérescences au cours des optimisations de vecteurs déplacement qui suivront (notamment lors de l'estimation de mouvement des autres images de la séquence d'images comprenant les images $I_1$ et $I_2$). Cette correction locale du maillage peut être effectuée par exemple selon la méthode dite du barycentre décrite dans la thèse intitulée "Représentation et codage de séquences vidéo par maillages 2D déformables" de Patrick Lechat, page 174, IRISA, Rennes, Octobre 1999.

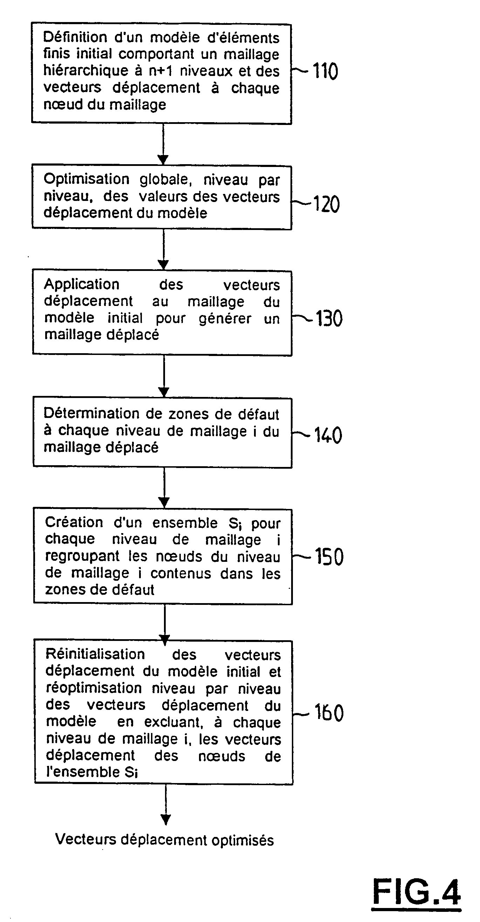

Selon un deuxième mode de réalisation illustré par la figure 4, le modèle défini lors de la première étape du procédé d'estimation de mouvement référencée 110 comprend un maillage hiérarchique, c'est-à-dire que le maillage est constitué de plusieurs maillages emboîtés correspondant chacun à un niveau de maillage. Les niveaux de maillage sont numérotés de 0 à N. Le niveau de maillage 0 correspond au maillage le plus grossier et le niveau de maillage N correspond au maillage le plus dense. Le maillage de niveau i est obtenu par subdivision des mailles du maillage de niveau i-1. Ainsi, tous les noeuds du niveau de maillage i appartiennent au niveau de maillage i+1. Les vecteurs déplacement associés aux noeuds du maillage hiérarchique sont initialement nuls et la fonction d'interpolation est la même que pour le premier mode de réalisation.

Selon une étape référencée 120, la valeur des vecteurs déplacement des noeuds du modèle est ensuite optimisée en appliquant la méthode de Gauss-Newton sur chaque niveau de maillage en commençant par le niveau de maillage 0. L'optimisation des vecteurs déplacement est effectuée niveau de maillage par niveau de maillage, les valeurs des vecteurs déplacement des noeuds communs aux niveaux de maillage i et i+1 obtenus au terme de l'optimisation au niveau i étant prises comme valeurs initiales pour ces noeuds lors de l'optimisation des vecteurs au niveau i+1. Les vecteurs déplacement des nouveaux noeuds, au niveau de maillage i+1, sont initialisés par des valeurs obtenues par interpolation des valeurs des vecteurs déplacement des noeuds du niveau i. On applique ensuite, à une étape référencée 130, les vecteurs déplacement calculés au maillage hiérarchique du modèle, ce qui met en évidence les zones de défauts lorsqu'elles existent.

Dans ce mode de réalisation, la détermination des zones de retournement ou de défaut (étape 140) s'effectue à chaque niveau de maillage en commençant par le niveau de maillage le plus grossier (niveau 0). Les zones de défaut du maillage au niveau de maillage i comprennent nécessairement les zones de défaut du maillage au niveau i-1. Ainsi, le niveau de maillage le plus fin (niveau N) comprend le plus grand nombre de zones de défaut et les zones de défaut les plus étendues. On aurait pu envisager de n'effectuer la détermination de zones de retournement ou de défaut que sur le maillage le plus fin mais il faut tenir compte du fait que certaines zones de défaut peuvent disparaître lorsque le maillage devient plus fin. Ces zones de défaut transitoires perturbent aussi l'optimisation des vecteurs déplacement et doivent par conséquent être identifiées.

Lesdites zones de défaut étant définies, il est alors possible de créer ensuite, pour chaque niveau de maillage i, un ensemble $S_i$ contenant les noeuds des zones de défaut du maillage au niveau i (étape 150). On peut noter que, pour tout $i \in [0..N]$, $S_i \subset S_{i+1}$.

On reprend ensuite le modèle initial, on réinitialise la valeur des vecteurs déplacement des noeuds du maillage hiérarchique et on réoptimise la valeur des vecteurs déplacement du modèle en excluant du modèle les vecteurs déplacement des noeuds des zones de défaut en appliquant la méthode de Gauss-Newton à chaque niveau de maillage (étape 160). Cette réoptimisation est d'abord effectuée sur les vecteurs déplacement des noeuds du maillage de niveau 0 en excluant les noeuds de l'ensemble $S_0$, puis sur les vecteurs déplacement des noeuds du maillage de niveau 1 en excluant les noeuds de l'ensemble $S_1$, et ainsi de suite jusqu'au niveau N.

Afin d'améliorer la position des noeuds du maillage déplacé associé à l'image $\hat{I}_2$, on peut éventuellement envisager d'effectuer une estimation de mouvement entre l'image $\hat{I}_2$ et l'image $I_2$. Pour ce faire, on prend un maillage composé du maillage déplacé pour la zone continue de l'image $\hat{I}_2$ et du maillage initial (c'est-à-dire du maillage de $I_1$) pour les zones de défaut. Le maillage pour les zones de défaut est éventuellement corrigé selon la méthode dite du barycentre. On effectue alors une estimation de mouvement entre les images $\hat{I}_2$ et $I_2$ avec ce maillage et on obtient ainsi des vecteurs déplacement de faible valeur (car $\hat{I}_2$ est une approximation de $I_2$). En appliquant ces vecteurs déplacements aux noeuds du maillage déplacé de l'image $\hat{I}_2$, on obtient un nouveau maillage déplacé dont la position des noeuds est amélioré.

Dans les deux modes de réalisation présentés précédemment, la première et la deuxième estimations de mouvement du procédé sont effectuées dans le même sens: elles sont soit avant pour détecter les disparitions d'objets, soit arrière pour détecter les apparitions d'objets.

Dans un mode de réalisation encore plus élaboré, on peut envisager d'effectuer une première estimation de mouvement qui soit une estimation de mouvement avant pour détecter les zones de défauts correspondant à des disparitions d'objets, une seconde estimation de mouvement qui soit une estimation de mouvement arrière pour détecter les zones de défauts correspondant à des apparitions d'objets, et enfin une dernière estimation de mouvement soit avant soit arrière en excluant de l'estimation les zones de défauts décelées lors des deux estimations précédentes de manière à exclure du calcul différentiel toutes les mailles qui pourraient introduire des erreurs.

L'invention a également pour objet un procédé de codage d'images fixes ou animées avec réduction de débit en vue de leur transmission ou leur stockage. Un tel procédé génère un train binaire représentatif de la séquence d'images codées. Ce procédé de codage comporte une estimation de mouvement mettant en oeuvre le procédé décrit précédemment. Cette estimation de mouvement est effectuée sur chaque couple d'images consécutives $(I_1, I_2)$ de la séquence. Cette estimation de mouvement peut être soit une estimation de mouvement avant (on calcule alors le mouvement entre $I_1$ et $I_2$), soit une estimation de mouvement arrière (on calcule alors le mouvement entre $I_2$ et $I_1$). Bien entendu, le mouvement de la première image de la séquence n'est pas estimé. Les données qui sont introduites dans le train binaire sont alors: des données pour décrire la première image, des données sur la structure du maillage de départ employé pour l'estimation de mouvement et les vecteurs déplacement de chaque image issus de l'estimation de mouvement. Les données se rapportant à la première image sont des données de structure d'un maillage utilisé pour décrire la première image et des données de luminance, de chrominance et de positions des noeuds de ce maillage. Le maillage utilisé pour décrire la première image de la séquence peut en effet être différent de celui employé pour l'estimation de mouvement; il peut notamment comporter plus de niveaux de maillage. En variante, on peut envisager d'effectuer une estimation de mouvement avant et une estimation de mouvement arrière selon le procédé d'estimation de mouvement de l'invention et d'introduire alors dans le train binaire pour chaque image des vecteurs déplacement qui seraient une combinaison linéaire des vecteurs déplacement issus des deux estimations de mouvement.

Avant d'être introduites dans le train binaire, les données de la première image de la séquence sont codées de manière différentielle. Par ailleurs, toutes les données de luminance, chrominance et positions à introduire dans le train binaire sont quantifiées et compressées avant d'être introduites dans le train binaire afin de limiter le nombre des valeurs possibles et réduire la quantité de données à transmettre ou à stocker.

Selon l'invention, on prévoit également d'introduire dans le train binaire, pour chaque image dont le mouvement a été estimé, un bit de détection indiquant si l'estimation de mouvement de cette image a engendré des retournements de mailles. Si tel est le cas, une valeur spécifique est alors réservée aux vecteurs déplacements des noeuds des zones de retournement détectées. Par exemple, la valeur 0 est attribuée aux vecteurs déplacement des zones de retournement, la valeur des autres vecteurs déplacement étant alors incrémentée d'une unité. Les vecteurs déplacement de valeur 0 servent pour le repérage des zones de retournement en réception. La taille k du disque correspondant à la zone de défaut est alors introduite dans le train binaire afin de déterminer les noeuds appartenant à cette zone. On peut également envisager d'assigner la valeur 0 à tous les noeuds des zones de défaut. Il devient alors inutile de transmettre la taille du k-disque.

Des données de description des zones de défaut de chaque image sont également introduites dans le train binaire à la suite des vecteurs déplacement. Ces données sont par exemple obtenues par approximation par éléments finis ou par application d'une transformée en cosinus discrète ou d'une transformée par ondelettes sur la partie de l'image correspondant à ces zones de défaut.

En variante, les données de description des zones de défaut introduites dans le train binaire sont des valeurs optimisées de luminance et de chrominance des noeuds de l'ensemble S, l'optimisation de ces valeurs consistant à modifier ces valeurs pour qu'elles représentent au mieux ces zones de défaut. Si le maillage est hiérarchique, cette optimisation peut être réalisée de deux manières différentes:

- soit l'optimisation est effectuée, pour toutes les zones de défaut de l'image considérée, sur tous les noeuds de l'ensemble $S_N$ (maillage le plus fin); cette optimisation peut alors être réalisée en utilisant une approche hiérarchique (optimisation des valeurs des noeuds de $S_0$, puis des valeurs des noeuds de $S_1$ en se basant sur celles des noeuds de $S_0$, ... jusqu'à $S_N$) ou en optimisant directement les valeurs des noeuds de $S_N$ ;
- soit chaque zone de défaut de l'image considérée est traitée individuellement et l'optimisation est alors effectuée sur les noeuds de l'ensemble $S_j$ appartenant à la zone de défaut considérée avec $j \geq l$, l étant le niveau de maillage où la zone de défaut considérée est apparue; de même, cette optimisation peut être réalisée en suivant une approche hiérarchique ou en optimisant directement les valeurs des noeuds de l'ensemble $S_j$.

Selon l'approche hiérarchique, on peut également envisager de commencer l'optimisation des valeurs à un niveau de maillage m>0 au lieu de la commencer au niveau 0.

L'optimisation des valeurs de luminance et de chrominance peut être réalisée par une méthode des moindres carrés qui consiste à minimiser un critère E' défini sur le domaine de la zone de défaut Ω. Ce critère est défini par l'expression suivante:

$$E' = \int_\Omega \left| I(x, y) - \sum_{n=1}^{M} \psi_{P_n}(x, y) \cdot v(P_n) \right|^2 dxdy$$

où

- P$_n$ est un noeud d'indice n du maillage,
- M est le nombre total de noeuds de l'ensemble S ou S$_i$ considéré,
- I(x,y) représente la valeur de luminance (resp. de chrominance) du pixel de coordonnées (x,y),
- ψP$_n$ est la fonction d'interpolation associée au sommet P$_n$,
- v(P$_n$) est la valeur optimisée de luminance (resp. de chrominance) associée au sommet P$_n$.

L'opération de minimisation de ce critère est donnée en détail dans la thèse intitulée "Représentation et codage de séquences vidéo par maillages 2D déformables" de Patrick Lechat, page 106, IRISA, Rennes, Octobre 1999.

Par ailleurs, en réception, le décodage du train binaire produit par ce procédé de codage consiste à:

- décoder l'ensemble des données incluses dans le train binaire,
- déterminer si le bit de détection indique la présence de zones de défaut dans le maillage lors de l'étape d'estimation de mouvement des images du procédé de codage,
- si tel est le cas, repérer les zones de défaut via les vecteurs déplacement de valeur nulle,
- décrémenter d'une unité la valeur des vecteurs déplacement de valeur non nulle, et
- recomposer la séquence d'images correspondant au train binaire.

## Revendications

**1.** Procédé d'estimation du mouvement entre deux images numériques, I$_1$ et I$_2$, de luminance Y$_1$ et Y$_2$, destiné à générer, pour chaque point de coordonnées x,y de l'image I$_2$ un vecteur déplacement $\vec{d}(x, y = (d_x, d_y)$ de manière à former une image Î$_2$ à partir de l'image I$_1$, de luminance $\hat{Y}_2$(x, y =Y$_1$ (x+d$_x$, y+d$_y$), qui soit une approximation de l'image I$_2$, comportant les étapes suivantes:

(a) - définir un modèle d'éléments finis initial comportant un maillage dont les noeuds sont des points de l'image I$_1$, un vecteur déplacement à chaque noeud dudit maillage, et une formule d'interpolation pour calculer la valeur du vecteur déplacement de chaque point de l'image I$_1$ à partir des valeurs des vecteurs déplacements des noeuds de la maille à laquelle il appartient,
(b) - optimiser dé manière globale les valeurs de l'ensemble des vecteurs déplacement du modèle selon une méthode différentielle,
(c) - appliquer lesdits vecteurs déplacement audit maillage du modèle initial de manière à générer un maillage déplacé représentatif de l'image Î$_2$,
(d) - déterminer des zones de défaut dans ledit maillage déplacé, lesquelles zones de défaut sont déterminées de telle manière qu'elles renferment chacune au moins une ou plusieurs mailles se retournant ou se chevauchant après application des vecteurs déplacement, l'ensemble desdites mailles du maillage déplacé se retournant ou se chevauchant après application des vecteurs déplacement étant renfermées dans lesdites zones de défaut;
(e) - créer un ensemble S regroupant l'ensemble des noeuds du maillage déplacé contenus dans les zones de défaut,
(f) - reprendre le modèle initial défini à l'étape (a), réinitialiser les valeurs de l'ensemble des vecteurs déplacement dudit modèle initial et réoptimiser les valeurs des vecteurs déplacement du modèle selon l'étape (b) en excluant du modèle les vecteurs déplacement des noeuds dudit ensemble S.

**2.** Procédé selon la revendication 1, **caractérisé en ce que**, au lieu de reprendre le modèle initial pour la réoptimisation des vecteurs déplacement à l'étape (f), on reprend un modèle correspondant au modèle obtenu à l'issue d'une

**EP 1 413 140 B1**

itération de l'optimisation réalisée à l'étape (b) pour laquelle les vecteurs déplacement optimisés n'engendrent pas de retournement de mailles, afin de diminuer le temps de traitement de l'étape (f).

**3.** Procédé selon la revendication 1 ou 2, **caractérisé en ce qu'**il comporte en outre les étapes suivantes à effectuer entre les étapes (b) et (c) :

(b1) - calculer un écart E entre l'image $\hat{I}_2$ et l'image $I_2$ pour chaque maille du modèle,
(b2) - opérer un maillage plus fin sur une fraction discrète de l'ensemble des mailles déterminée selon un critère relatif aux écarts E, et attribuer un vecteur déplacement à chaque nouveau noeud de maillage,
(b3) - répéter les étapes (b), (b1) et (b2) sur le modèle obtenu au terme de l'étape (b2) précédente, jusqu'à satisfaire un critère d'arrêt.

**4.** Procédé selon la revendication 3, pour opérer un maillage plus fin sur une fraction discrète de l'ensemble des mailles à l'étape (b2), on compare l'ensemble des écarts E calculés à l'étape (b1) à un écart seuil, et on subdivise en mailles de taille inférieure les mailles dont les écarts E sont supérieurs à l'écart seuil.

**5.** Procédé selon la revendication 3 ou 4, **caractérisé en ce que** ledit critère d'arrêt est un nombre prédéterminé de mailles dans le modèle à atteindre au terme de l'étape (b2).

**6.** Procédé selon la revendication 3 ou 4, **caractérisé en ce que** ledit critère d'arrêt de l'étape (b3) est satisfait lorsque les écarts E de l'ensemble des mailles du modèle obtenu au terme de l'étape (b2) précédente sont inférieurs à un écart seuil.

**7.** Procédé d'estimation du mouvement entre deux images numériques, $I_1$ et $I_2$, de luminance $Y_1$ et $Y_2$, destiné à générer, pour chaque point de coordonnées x,y de l'image $I_2$ un vecteur déplacement $\vec{d}(x, y = (d_x, d_y)$ de manière à former une image $\hat{I}_2$ à partir de l'image $I_1$, de luminance $\hat{Y}_2(x, y = Y_1 (x+d_x, y+d_y)$ qui soit une approximation de l'image $I_2$, comportant les étapes suivantes:

(a) - définir un modèle d'éléments finis initial comportant un maillage hiérarchique dont les noeuds sont des points de l'image $I_1$, ledit maillage hiérarchique comportant N+1 niveaux de maillage (0...N) et chaque noeud dudit maillage hiérarchique appartenant à au moins un niveau de maillage, un vecteur déplacement à chaque noeud dudit maillage hiérarchique, et une formule d'interpolation pour calculer la valeur du vecteur déplacement de chaque point de l'image $I_1$ à partir des valeurs des vecteurs déplacement des noeuds de la maille à laquelle il appartient,
(b) - optimiser de manière globale, niveau de maillage par niveau de maillage, les valeurs de l'ensemble des vecteurs déplacement du modèle selon une méthode différentielle en partant du niveau de maillage le plus grossier (niveau 0) et en s'appuyant à chaque niveau sur les valeurs optimisées du niveau de maillage inférieur,
(c) - appliquer lesdits vecteurs déplacement audit maillage hiérarchique du modèle initial de manière à générer un maillage déplacé représentatif de l'image $\hat{I}_2$,
(d) - déterminer des zones de défaut à chaque niveau de maillage du maillage déplacé, lesquelles zones de défaut sont déterminées de telle manière qu'elles renferment chacune au moins une ou plusieurs mailles se retournant ou se chevauchant après application des vecteurs déplacement, l'ensemble desdites mailles dudit maillage hiérarchique se retournant ou se chevauchant après application des vecteurs déplacement étant renfermées dans lesdites zones de défaut, les zones de défaut du maillage de niveau de maillage i comprenant au moins les zones de défaut du maillage de niveau de maillage i-1;
(e) - créer un ensemble $S_i$ pour chaque niveau de maillage i, lequel ensemble $S_i$ regroupe l'ensemble des noeuds du niveau de maillage i du maillage déplacé contenus dans les zones de défaut,
(f) - reprendre le modèle initial défini à l'étape (a), réinitialiser les valeurs de l'ensemble des vecteurs déplacements dudit modèle initial et réoptimiser la valeur des vecteurs déplacement dudit modèle selon l'étape (b) en excluant à chaque niveau de maillage i les vecteurs déplacement des noeuds de l'ensemble $S_i$ correspondant.

**8.** Procédé selon la revendication 7, **caractérisé en ce que**, au lieu de reprendre le modèle initial pour la réoptimisation des vecteurs déplacement à l'étape (f), on reprend un modèle correspondant au modèle obtenu à l'issue d'une itération de l'optimisation réalisée à l'étape (b) pour laquelle les vecteurs déplacement optimisés n'engendrent pas de retournement de mailles, afin de diminuer le temps de traitement de l'étape (f).

**9.** Procédé selon l'une des revendications 1 à 8, **caractérisé en ce que** chaque zone de défaut est un k-disque d'une zone englobant au moins une maille se retournant ou se chevauchant après application des vecteurs déplacement.

**10.** Procédé selon l'unes revendications 3 à 9, **caractérisé en ce qu'**il comporte en outre une étape de correction de la position des noeuds des zones de défaut afin d'améliorer la convergence de l'étape (b) pour l'estimation de mouvement d'images par rapport à l'image $I_2$.

**11.** Procédé selon l'une des revendications 1 à 10, **caractérisé en ce que** les images $I_1$ et $I_2$ appartiennent à une même séquence d'images numériques et **en ce que** l'image $I_2$ est consécutive à $I_1$ dans ladite séquence d'images numériques.

**12.** Procédé selon l'une des revendications 1 à 10, **caractérisé en ce que** les images $I_1$ et $I_2$ appartiennent à une même séquence d'images numériques et **en ce que** l'image $I_1$ est consécutive à $I_2$ dans ladite séquence d'images numériques.

**13.** Application du procédé d'estimation de mouvement selon l'une des revendications 1 à 12 pour le codage d'une séquence d'images numériques.

**14.** Procédé de codage d'une séquence d'images numériques visant à produire un train binaire représentatif de ladite séquence d'images, **caractérisé en ce qu'**il comporte les étapes suivantes:

- effectuer une estimation de mouvement avant pour chaque couple d'images consécutives de la séquence en mettant en oeuvre le procédé d'estimation de mouvement selon l'une quelconque des revendications 1 à 11, et
- introduire dans le train binaire des données pour décrire la première image de ladite séquence d'images, des données sur la structure du maillage employé pour l'étape d'estimation de mouvement, les vecteurs déplacements obtenus à l'issue de ladite étape d'estimation de mouvement de chaque image et des données de défaut pour représenter les zones de défaut déterminées au cours de l'étape d'estimation de mouvement.

**15.** Procédé de codage d'une séquence d'images numériques visant à produire un train binaire représentatif de ladite séquence d'images, **caractérisé en ce qu'**il comporte les étapes suivantes:

- effectuer une estimation de mouvement arrière pour chaque couple d'images consécutives de la séquence en mettant en oeuvre le procédé d'estimation de mouvement selon l'une quelconque des revendications 1 à 10 et 12, et
- introduire dans le train binaire des données pour décrire la première image de ladite séquence d'images, des données sur la structure du maillage employé pour l'étape d'estimation de mouvement, les vecteurs déplacements obtenus à l'issue de ladite étape d'estimation de mouvement de chaque image et des données de défaut pour représenter les zones de défaut déterminées au cours de l'étape d'estimation de mouvement.

**16.** Procédé de codage d'une séquence d'images numériques visant à produire un train binaire représentatif de ladite séquence d'images, **caractérisé en ce qu'**il comporte les étapes suivantes:

- effectuer, pour chaque couple d'images consécutives de la séquence, une estimation de mouvement avant et une estimation de mouvement arrière en mettant en oeuvre pour chacune des estimations de mouvement le procédé d'estimation de mouvement selon l'une quelconque des revendications 1 à 12, et
- introduire dans le train binaire des données pour décrire la première image de ladite séquence d'images, des données sur la structure du maillage employé pour l'étape d'estimation de mouvement, des vecteurs déplacement qui soient pour chaque image une combinaison linéaire des vecteurs déplacement obtenus à l'issue des deux étapes d'estimation de mouvement précédentes et des données de défaut pour représenter les zones de défaut déterminées au cours des deux étapes d'estimation de mouvement précédentes.

**17.** Procédé selon l'une des revendications 14 à 16, **caractérisé en ce que** le train binaire comporte en outre un bit de détection indiquant si l'étape d'estimation de mouvement de chacune des images a déterminé des zones de défaut dans le maillage.

**18.** Procédé selon l'une des revendications 14 à 17, **caractérisé en ce que** la valeur des vecteurs déplacement obtenus à l'issue de ladite étape d'estimation de mouvement est modifiée avant d'introduire lesdits vecteurs déplacement dans le train binaire.

**19.** Procédé selon la revendication 18, **caractérisé en ce que** la valeur zéro est attribuée aux vecteurs déplacement des noeuds des zones de défaut et **en ce que** la valeur des autres vecteurs déplacement du modèle est incrémentée d'une unité.

**20.** Procédé selon l'une des revendications 14 à 19, **caractérisé en ce que** les données de défaut introduites dans le train binaire sont obtenues par application d'une transformée en cosinus discrète sur la partie correspondante de l'image numérique.

**21.** Procédé selon l'une des revendications 14 à 19, **caractérisé en ce que** les données de défaut introduites dans le train binaire sont obtenues par application d'une transformée par ondelettes sur la partie correspondante de l'image numérique.

**22.** Procédé selon l'une des revendications 14 à 19, **caractérisé en ce que** les données de défaut introduites dans le train binaire sont obtenues par application d'une méthode d'approximation par éléments finis sur la partie correspondante de l'image numérique.

**23.** Procédé selon l'une des revendications 14 à 19, elle-même dépendante de l'une des revendications 1 à 6, **caractérisé en ce que** les données de défaut introduites dans le train binaire sont les valeurs de luminance, de chrominance et éventuellement de position des noeuds de l'ensemble S.

**24.** Procédé selon la revendication 23, **caractérisé en ce que** les valeurs de luminance et de chrominance des noeuds de l'ensemble S sont optimisées avant d'être introduites dans le train binaire.

**25.** Procédé selon la revendication 24, **caractérisé en ce que** les valeurs de position des noeuds de l'ensemble S sont optimisées avant d'être introduites dans le train binaire.

**26.** Procédé selon l'une des revendications 14 à 19, elle-même dépendante de l'une des revendications 7 à 10, **caractérisé en ce que** les données de défaut introduites dans le train binaire sont les valeurs de luminance, de chrominance et de position des noeuds de l'ensemble $S_N$ se rapportant au niveau de maillage le plus élevé (N).

**27.** Procédé selon la revendication 26, **caractérisé en ce que** les valeurs de luminance et de chrominance des noeuds de l'ensemble $S_N$ sont optimisées avant d'être introduites dans le train binaire.

**28.** Procédé selon la revendication 27, **caractérisé en ce que** les valeurs de position des noeuds de l'ensemble $S_N$ sont optimisées avant d'être introduites dans le train binaire.

**29.** Procédé selon la revendication 27 ou 28, **caractérisé en ce que** l'optimisation des valeurs de luminance et de chrominance des noeuds de l'ensemble $S_N$ se rapportant au niveau de maillage le plus élevé (N) est réalisée selon une approche hiérarchique, en optimisant d'abord les valeurs de luminance et de chrominance des noeuds de l'ensemble $S_0$ correspondant au niveau de maillage le plus grossier, puis les valeurs de luminance et de chrominance des noeuds des ensembles intermédiaires $S_i$ en se basant sur les valeurs de luminance et de chrominance des noeuds du niveau de maillage inférieur $S_{i-1}$, jusqu'à atteindre le niveau de maillage le plus élevé (N).

**30.** Procédé selon la revendication 29, **caractérisé en ce que** l'optimisation selon une approche hiérarchique des valeurs de luminance et de chrominance de l'ensemble $S_N$ est réalisée en commençant par l'optimisation des valeurs de luminance et de chrominance des noeuds de l'ensemble $S_m$, avec m>0.

**31.** Procédé selon l'une des revendications 14 à 19, elle-même dépendante de l'une des revendications 7 à 10, **caractérisé en ce que** les données de défaut introduites dans le train binaire sont les valeurs de luminance, de chrominance et de position des noeuds de l'ensemble $S_j$ avec j≥l, l étant le niveau de maillage où la zone de défaut considérée est apparue.

**32.** Procédé selon la revendication 31, **caractérisé en ce que** les valeurs de luminance et de chrominance des noeuds de l'ensemble $S_j$ sont optimisées avant d'être introduites dans le train binaire.

**33.** Procédé selon la revendication 32, **caractérisé en ce que** les valeurs de position des noeuds de l'ensemble $S_j$ sont optimisées avant d'être introduites dans le train binaire.

**34.** Procédé selon la revendication 32 ou 33, **caractérisé en ce que** l'optimisation des valeurs de luminance et de chrominance des noeuds de l'ensemble S$_j$ est réalisée selon une approche hiérarchique, en optimisant d'abord les valeurs de luminance et de chrominance des noeuds de l'ensemble S$_0$ correspondant au niveau de maillage le plus grossier, puis les valeurs de luminance et de chrominance des noeuds des ensembles intermédiaires S$_i$ en se basant sur les valeurs de luminance et de chrominance des noeuds du niveau de maillage inférieur S$_{i-1}$, jusqu'à atteindre le niveau de maillage j.

**35.** Procédé selon la revendication 34, **caractérisé en ce que** l'optimisation selon une approche hiérarchique des valeurs de luminance et de chrominance de l'ensemble S$_j$ est réalisée en commençant par l'optimisation des valeurs de luminance et de chrominance des noeuds de l'ensemble S$_m$, avec 0<m<j.

**36.** Procédé de décodage d'un train binaire représentatif d'une séquence d'images et produit par le procédé de codage selon l'une des revendications 19 à 35, **caractérisé en ce qu'**il comporte les étapes suivantes:

- décoder l'ensemble des données incluses dans ledit train binaire,
- déterminer si le bit de détection indique la présence de zones de défaut dans le maillage lors de l'étape d'estimation de mouvement des images du procédé de codage,
- si tel est le cas, repérer lesdites zones de défaut via les vecteurs déplacement de valeur nulle,
- décrémenter d'une unité la valeur des vecteurs déplacement de valeur non nulle, et
- recomposer ladite séquence d'images.

**Claims**

**1.** Method for estimating the motion between two digital images I$_1$ and I$_2$ with luminance Y$_1$ and Y$_2$ and intended to generate for each point of coordinates x, y of the image I$_2$ a displacement vector $\vec{d}\,(x,\ y) = (d_x,\ d_y)$ so as to form an image Î$_2$ from the image I$_1$ with luminance $\hat{Y}_2$ (x, y) =Y$_1$ (x+d$_x$, y+d$_y$) which is an approximation of the image I$_2$, comprising the following steps:

(a)-defining an initial finite element model comprising a mesh whose nodes are points of the image I$_1$, a displacement vector at each node of said mesh, and an interpolation formula so as to calculate the value of the displacement vector of each point of the image I$_1$ on the basis of the values of the displacement vectors of the nodes of the mesh cell to which it belongs,
(b)-optimizing globally the values of all the displacement vectors of the model according to a differential method,
(c)-applying said displacement vectors to said mesh of the initial model so as to generate a displaced mesh representative of the image Î$_2$,
(d)-determining faulty areas in said displaced mesh, said faulty areas being determined so that they each contain at least one or several mesh cells overturning or overlapping after applying the displacement vectors, all said mesh cells of the displaced mesh overturning or overlapping after applying the displacement vectors being contained in said faulty areas,
(e)-creating a set S including all the nodes of the displaced mesh contained in the faulty areas,
(f)-taking up again the initial model defined in step (a), reinitializing the values of all the displacement vectors of said initial model and re-optimizing the values of the displacement vectors of the model according to step (b) by excluding from the model the displacement vectors of the nodes of said set S.

**2.** Method according to Claim 1, **characterized in that**, instead of taking up again the initial model for reoptimization of the displacement vectors in step (f), a model is taken up corresponding to the model obtained at the end of an iteration of the optimization carried out in step (b) for which the optimized displacement vectors do not generate any overtuning of mesh cells so as to reduce the processing time of step (f).

**3.** Method according to Claim 1 or 2, **characterized in that** it further comprises the following steps to be carried out between steps (b) and (c):

(bl)-calculating a difference E between the image Î$_2$ and the image I$_2$ for each mesh cell of the model,
(b2)-carrying out a finer meshing on a discrete fraction of all the mesh cells determined according to a criterion relating to the differences E and allocating a displacement vector to each new mesh node,

(b3)-repeating the steps (b), (b1) and (b2) on the model obtained at the end of the preceding step (b2) until a stop criterion is satisfied.

4. Method according to Claim 3, **characterized in that**, so as to carry out a finer meshing on a discrete fraction of all the mesh cells in step (b2), all the differences E calculated in step (b1) are compared with a threshold difference and those mesh cells whose differences E are greater than the threshold difference are subdivided into smaller mesh cells.

5. Method according to Claim 3 or 4, **characterized in that** said stop criterion is a predetermined number of mesh cells in the model to be attained at the end of step (b2).

6. Method according to Claim 3 or 4, **characterized in that** said stop criterion of step (b3) is satisfied when the differences E of all mesh cells of the model obtained at the end of the preceding step (b2) are less than a threshold difference.

7. Method for estimating the motion between two digital images $I_1$ and $I_2$ with luminance $Y_1$ and $Y_2$ and intended to generate for each point of coordinates x, y of the image $I_2$ a displacement vector $\vec{d}(x,y) = (d_x, d_y)$ so as to form an image $\hat{I}_2$ from the image $I_1$ with luminance $\hat{Y}_2(x,y)=Y_1(x+d_x,y+d_y)$ which is an approximation of the image $I_2$, said method comprising the following steps:

(a)-defining an initial finite element model comprising a hierarchical mesh whose nodes are points of the image $I_1$, said hierarchical mesh comprising N+1 mesh levels (0...N) and each node of said hierarchical mesh belonging to at least one mesh level, a displacement vector at each node of said hierarchical mesh, and an interpolation formula for calculating the value of the displacement vector of each point of the image $I_1$ on the basis of the values of the displacement vectors of the nodes of the mesh cell to which it belongs,

(b)-optimizing globally, mesh level by mesh level, the values of all the displacement vectors of the model according to a differential method starting from the coarsest mesh level (level 0) and based at each level on the optimized values of the lower mesh level,

(c)-applying said displacement vectors to said hierarchical mesh of the initial model so as to generate a displaced mesh representative of the image $\hat{I}_2$,

(d)-determining faulty areas at each mesh level of the displaced mesh, said faulty areas being determined so that they each contain at least one or several overturning or overlapping mesh cells after application of the displacement vectors, all said mesh cells of said hierarchical mesh overturning or overlapping after application of the displacement vectors being contained in said faulty areas, said faulty areas of the mesh of mesh level i including at least the faulty areas of the mesh level i-1,

(e)-creating a set $S_i$ for each mesh level i, said set $S_i$ including all the nodes of the mesh level i of the displaced mesh contained in the faulty areas,

(f)-taking up again the initial model defined in step (a), reinitializing the values of all the displacement vectors of said initial model and re-optimizing the value of the displacement vectors of said model according to step (b) by excluding at each mesh level i the displacement vectors of the nodes of the corresponding set $S_i$.

8. Method according to Claim 7, **characterized in that**, instead of taking up the initial model for re-optimizing the displacement vectors in step (f), a model is taken corresponding to the model obtained at the end of an iteration of the optimization carried out in step (b) for which the optimized displacement vectors do not generate any overturning of mesh cells so as to reduce the processing time of step (f).

9. Method according to one of Claims 1 to 8, **characterized in that** each faulty area is a k-disc of an area encompassing at least one overturning or overlapping mesh cell after application of the displacement vectors.

10. Method according to one of Claims 3 to 9, **characterized in that** it further comprises a step for correcting the position of the nodes of the faulty areas so as to improve the convergence of step (b) for estimating the motion of images with respect to the image $I_2$.

11. Method according to one of Claims 1 to 10, **characterized in that** the images $I_1$ and $I_2$ belong to a given sequence of digital images and **in that** the image $I_2$ is consecutive to $I_1$ in said sequence of digital images.

12. Method according to one of Claims 1 to 10, **characterized in that** the images $I_1$ and $I_2$ belong to a given sequence of digital images and **in that** the image $I_1$ is consecutive to $I_2$ in said sequence of digital images.

13. Application of the motion estimation method according to one of Claims 1 to 12 for coding a sequence of digital images.

14. Method for coding a sequence of digital images for producing a binary train representative of said sequence of images, **characterized in that** it comprises the following steps:

- carrying out a forward motion estimation for each pair of consecutive images of the sequence by implementing the motion estimation method according to one of Claims 1 to 11, and
- introducing into the binary train data for describing the first image of said sequence of images, data concerning the structure of the mesh used for the motion estimation step, the displacement vectors obtained at the end of said motion estimation step for each image and faulty data for representing the faulty areas determined during the motion estimation step.

15. Method for coding a sequence of digital images so as to produce a binary train representative of said sequence of images, **characterized in that** it comprises the following steps:

- carrying out a backward motion estimation for each pair of consecutive images of the sequence by implementing the motion estimation method according to one of Claims 1 to 10 and 12, and
- introducing into the binary train data for describing the first image of said sequence of images, data concerning the structure of the mesh used for the motion estimation step, the displacement vectors obtained at the end of said motion estimation step of each image, and faulty data for representing the faulty areas determined during the motion estimation step.

16. Method for coding a sequence of digital images for producing a binary train representative of said sequence of images, **characterized in that** it comprises the following steps:

- carrying out a forward and a backward motion estimation for each pair of consecutive images of the sequence by implementing, for each of the motion estimations, the motion estimation method according to one of Claims 1 to 12, and
- introducing into the binary train data for describing the first image of said sequence of images, data concerning the structure of the mesh used for the motion estimation step, displacement vectors which are for each image a linear combination of the displacement vectors obtained at the end of the two preceding motion estimation steps, and faulty data for representing the faulty areas determined during the two preceding motion estimation steps.

17. Method according to one of Claims 14 to 16, **characterized in that** the binary train further comprises a detection bit indicating whether the motion estimation step of each of the images has determined faulty areas in the mesh.

18. Method according to one of Claims 14 to 17, **characterized in that** the value of the displacement vectors obtained at the end of said motion estimation step is modified before introducing said displacement vectors into the binary train.

19. Method according to Claim 18, **characterized in that** the value zero is allocated to the displacement vectors of the nodes of the faulty areas and **in that** the value of the other displacement vectors of the model is increased by one unit.

20. Method according to one of Claims 14 to 19, **characterized in that** the faulty data introduced into the binary train is obtained by applying a discrete cosine transform to the corresponding portion of the digital image.

21. Method according to one of Claims 14 to 19, **characterized in that** the faulty data introduced into the binary train is obtained by applying a wavelet transform to the corresponding portion of the digital image.

22. Method according to one of Claims 14 to 19, **characterized in that** the faulty data introduced into the binary train is obtained by applying a finite element approximation method to the corresponding portion of the digital image.

23. Method according to one of Claims 14 to 19, itself dependent on one of Claims 1 to 6, **characterized in that** the faulty data introduced into the binary train is luminance, chrominance and possibly position values of the nodes of the set S.

24. Method according to Claim 23, **characterized in that** the luminance and chrominance values of the nodes of the set S are optimized before being introduced into the binary train.

25. Method according to Claim 24, **characterized in that** the position values of the nodes of the set S are optimized before being introduced into the binary train.

26. Method according to one of Claims 14 to 19, itself dependent on one of Claims 7 to 10, **characterized in that** the faulty data introduced into the binary train is luminance, chrominance and position values of the nodes of the set $S_N$ relating to the highest mesh level (N).

27. Method according to Claim 26, **characterized in that** the luminance and chrominance values of the nodes of the set $S_N$ are optimized before being introduced into the binary train.

28. Method according to Claim 27, **characterized in that** the position values of the nodes of the set $S_N$ are optimized before being introduced into the binary train.

29. Method according to Claim 27 or 28, **characterized in that** the optimization of the luminance and chrominance values of the nodes of the set $S_N$ relating to the highest mesh level (N) is effected according to a hierarchical approach by first of all optimizing the luminance and chrominance values of the nodes of the set $S_0$ corresponding to the coarsest mesh level, then the luminance and chrominance values of the nodes of the intermediate sets $S_i$ based on the luminance and chrominance values of the nodes of the lower mesh level $S_{i-1}$, until reaching the highest mesh level (N).

30. Method according to Claim 29, **characterized in that** optimization according to a hierarchical approach of the luminance and chrominance values of the set $S_N$ is effected starting with the optimization of the luminance and chrominance values of the nodes of the set $S_m$ with m>0.

31. Method according to one of Claims 14 to 19, itself dependent on one of Claims 7 to 10, **characterized in that** the faulty data introduced into the binary train are luminance, chrominance and position values of the nodes of the set $S_j$ with j>=1, 1 being the mesh level where the faulty area in question has appeared.

32. Method according to Claim 31, **characterized in that** the luminance and chrominance values of the nodes of the set $S_j$ are optimized before being introduced into the binary train.

33. Method according to Claim 32, **characterized in that** the position values of the nodes of the set $S_j$ are optimized before being introduced into the binary train.

34. Method according to Claim 32 or 33, **characterized in that** the optimization of the luminance and chrominance values of the nodes of the set $S_j$ is effected according to a hierarchical approach by first of all optimizing the luminance and chrominance values of the nodes of the set $S_0$ corresponding to the coarsest mesh level, then the luminance and chrominance values of the nodes of the intermediate sets $S_i$ based on the luminance and chrominance values of the nodes of the lower mesh level $S_{i-1}$ until reaching the mesh level j.

35. Method according to Claim 34, **characterized in that** the optimization according to a hierarchical approach of the luminance and chrominance values of the set $S_j$ is effected starting with the optimization of the luminance and chrominance values of the nodes of the set $S_m$ with 0<m<j.

36. Method for decoding a binary train representative of a sequence of images and produced by the coding method according to one of Claims 19 to 35, **characterized in that** it comprises the following steps:

    - decoding all the data included in said binary train,
    - determining whether the detection bit indicates the presence of faulty areas of the mesh during the images motion estimation step of the coding method,
    - if this is the case, marking said faulty areas via the zero value displacement vectors,
    - decreasing by one unit the value of the nonzero value displacement vectors, and
    - recreating said sequence of images.

**Patentansprüche**

1. Verfahren zur Schätzung der Bewegung zwischen zwei digitalen Bildern $I_1$ und $I_2$ mit einer Leuchtdichte $Y_1$ und $Y_2$, das dazu bestimmt ist, für jeden Koordinatenpunkt x, y des Bildes $I_2$ einen Verschiebungsvektor

$$\vec{d}\,(x,y)=(d_x,d_y)$$

zu erzeugen, um ein Bild $\hat{I}_2$ aus dem Bild $I_1$ mit einer Leuchtdichte $\hat{Y}_2\,(x,y) = Y_1\,(x+d_x,\,y+d_y)$ zu formen, das eine Annäherung an das Bild $I_2$ ist, umfassend die folgenden Schritte:

(a)- Definition eines Ausgangsmodells von endlichen Elementen, umfassend ein Maschennetz, dessen Knoten Punkte des Bildes $I_1$ sind, einen Verschiebungsvektor an jedem Knoten des Maschennetzes und eine Interpolationsformel, um den Wert des Verschiebungsvektors jedes Punktes des Bildes $I_1$ aus den Werten der Verschiebungsvektoren der Knoten der Masche, der er angehört, zu berechnen,

(b)- globale Optimierung der Werte der Gesamtheit der Verschiebungsvektoren des Modells nach einer Differentialmethode,

(c)- Anlegen der Verschiebungsvektoren an das Maschennetz des Ausgangsmodells, um ein verschobenes Maschennetz, das für das Bild $\hat{I}_2$ steht, zu erzeugen,

(d)- Bestimmung der Fehlerzonen in dem verschobenen Maschennetz, wobei diese Fehlerzonen derart bestimmt werden, dass sie jeweils mindestens eine oder mehrere Maschen einschließen, die sich umkehren oder überlappen, nachdem die Verschiebungsvektoren angelegt wurden, wobei die Gesamtheit der Maschen des verschobenen Maschennetzes, die sich umkehren oder überlappen, in den Fehlerzonen eingeschlossen sind, nachdem die Verschiebungsvektoren angelegt wurden;

(e)- Erzeugung einer Gesamtheit S, die die Gesamtheit der Knoten des verschobenen Maschennetzes, die in den Fehlerzonen enthalten sind, zusammenfasst,

(f) - Heranziehen des in Schritt (a) definierten Ausgangsmodells, Reinitialisierung der Werte der Gesamtheit der Verschiebungsvektoren des Ausgangsmodells und Neuoptimierung der Werte der Verschiebungsvektoren des Modells nach Schritt (b), wobei aus dem Modell die Verschiebungsvektoren der Knoten der Gesamtheit S ausgeschlossen werden.

2. Verfahren nach Anspruch 1, **dadurch gekennzeichnet, dass**, anstatt das Ausgangsmodell für die Neuoptimierung der Verschiebungsvektoren in Schritt (f) heranzuziehen, ein Modell herangezogen wird, das dem nach einer Iteration der in Schritt (b) durchgeführten Optimierung erhaltenen Modell entspricht, wobei die optimierten Verschiebungsvektoren keine Umkehr der Maschen hervorrufen, um die Bearbeitungszeit des Schrittes (f) zu verkürzen.

3. Verfahren nach Anspruch 1 oder 2, **dadurch gekennzeichnet, dass** es ferner die folgenden Schritte umfasst, die zwischen den Schritten (b) und (c) durchzuführen sind:

(b1) - Berechnung eines Abstandes E zwischen dem Bild $\hat{I}_2$ und dem Bild $I_2$ für jede Masche des Modells,

(b2) - Herstellung eines feineren Maschennetzes auf einem kleinen Bruchteil der Gesamtheit der Maschen, der nach einem Kriterium bezogen auf die Abstände E bestimmt wird, und Zuteilen eines Verschiebungsvektors zu jedem neuen Knoten des Maschennetzes,

(b3) - Wiederholen der Schritte (b), (b1) und (b2) auf dem erhaltenen Modell nach dem vorhergehenden Schritt (b2) bis zur Erfüllung eines Anhaltekriteriums.

4. Verfahren nach Anspruch 3 zur Herstellung eines feineren Maschennetzes auf einem kleinen Bruchteil der Gesamtheit der Maschen in Schritt (b2), wobei die Gesamtheit der Abstände E, die in Schritt (b1) berechnet wurden, mit einem Grenzabstand verglichen wird, und die Maschen, deren Abstände E größer als der Grenzabstand sind, in Maschen mit kleinerer Größe unterteilt werden.

5. Verfahren nach Anspruch 3 oder 4, **dadurch gekennzeichnet, dass** das Anhaltekriterium eine vorbestimmte Anzahl von Machen in dem nach Schritt (b2) zu erreichenden Modell ist.

6. Verfahren nach Anspruch 3 oder 4, **dadurch gekennzeichnet, dass** das Anhaltekriterium aus Schritt (b3) erfüllt ist, wenn die Abstände E der Gesamtheit der Maschen des nach dem vorhergehenden Schritt (b2) erhaltenen Modells kleiner als ein Grenzabstand sind.

7. Verfahren zur Schätzung der Bewegung zwischen zwei digitalen Bildern $I_1$ und $I_2$ mit einer Leuchtdichte $Y_1$ und $Y_2$, das dazu bestimmt ist, für jeden Koordinatenpunkt x, y des Bildes $I_2$ einen Verschiebungsvektor

$\vec{d}\,(\mathbf{x},\mathbf{y}) = (d_x, d_y)$ zu erzeugen, um ein Bild $\hat{I}_2$ aus dem Bild $I_1$ mit einer Leuchtdichte $\hat{Y}_2$ (x, y) =$Y_1$ (x+$d_x$, y+$d_y$) zu formen, das eine Annäherung an das Bild $I_2$ ist, umfassend die folgenden Schritte:

(a)- Definition eines Ausgangsmodells von endlichen Elementen, umfassend ein hierarchisches Maschennetz, dessen Knoten Punkte des Bildes $I_1$ sind, wobei das hierarchische Maschennetz N+1 Maschennetzniveaus (0...N) umfasst und jeder Knoten des hierarchischen Maschennetzes mindestens einem Maschennetzniveau angehört, einen Verschiebungsvektor an jedem Knoten des hierarchischen Maschennetzes und eine Interpolationsformel, um den Wert des Verschiebungsvektors jedes Punktes des Bildes $I_1$ aus den Werten der Verschiebungsvektoren der Knoten der Masche, der er angehört, zu berechnen,

(b) - globale Optimierung von Maschennetzniveau zu Maschennetzniveau der Werte der Gesamtheit der Verschiebungsvektoren des Modells nach einer Differentialmethode, ausgehend von dem gröbsten Maschennetzniveau (Niveau 0) und basierend auf jedem Niveau auf den optimierten Werten des unteren Maschennetzniveaus,

(c)- Anlegen der Verschiebungsvektoren an das hierarchische Maschennetz des Ausgangsmodells, um ein verschobenes Maschennetz, das für das Bild $\hat{I}_2$ steht, zu erzeugen,

(d)- Bestimmung der Fehlerzonen auf jedem Maschennetzniveau in dem verschobenen Maschennetz, wobei diese Fehlerzonen derart bestimmt werden, dass sie jeweils mindestens eine oder mehrere Maschen einschließen, die sich umkehren oder überlappen, nachdem die Verschiebungsvektoren angelegt wurden, wobei die Gesamtheit der Maschen des hierarchischen Maschennetzes, die sich umkehren oder überlappen, in den Fehlerzonen eingeschlossen sind, nachdem die Verschiebungsvektoren angelegt wurden, wobei die Fehlerzonen des Maschennetzes des Maschennetzniveaus i mindestens die Fehlerzonen des Maschennetzes des Maschennetzniveaus i-1 umfassen;

(e) - Erzeugung einer Gesamtheit $S_i$ für jedes Maschennetzniveau i, wobei die Gesamtheit $S_i$ die Gesamtheit der Knoten des Maschennetzniveaus i des verschobenen Maschennetzes, die in den Fehlerzonen enthalten sind, zusammenfasst,

(f)- Heranziehen des in Schritt (a) definierten Ausgangsmodells, Reinitialisierung der Werte der Gesamtheit der Verschiebungsvektoren des Ausgangsmodells und Neuoptimierung der Werte der Verschiebungsvektoren des Modells nach Schritt (b), wobei aus jedem Maschennetzniveau i die Verschiebungsvektoren der Knoten der entsprechenden Gesamtheit $S_i$ ausgeschlossen werden.

**8.** Verfahren nach Anspruch 7, **dadurch gekennzeichnet, dass**, anstatt das Ausgangsmodell für die Neuoptimierung der Verschiebungsvektoren in Schritt (f) heranzuziehen, ein Modell herangezogen wird, das dem nach einer Iteration der in Schritt (b) durchgeführten Optimierung erhaltenen Modell entspricht, wobei die optimierten Verschiebungsvektoren keine Umkehr der Maschen hervorrufen, um die Bearbeitungszeit des Schrittes (f) zu verkürzen.

**9.** Verfahren nach einem der Ansprüche 1 bis 8, **dadurch gekennzeichnet, dass** jede Fehlerzone eine k-Scheibe einer Zone ist, die mindestens eine sich umkehrende oder überlappende Masche nach Anlegen der Verschiebungsvektoren einschließt.

**10.** Verfahren nach einem der Ansprüche 3 bis 9, **dadurch gekennzeichnet, dass** es ferner einen Schritt der Korrektur der Position der Knoten der Fehlerzonen umfasst, um die Konvergenz des Schrittes (b) für die Schätzung der Bewegung von Bildern in Bezug auf das Bild $I_2$ zu verbessern.

**11.** Verfahren nach einem der Ansprüche 1 bis 10, **dadurch gekennzeichnet, dass** die Bilder $I_1$ und $I_2$ einer selben Sequenz von digitalen Bildern angehören, und dass das Bild $I_2$ auf $I_1$ in der digitalen Bildsequenz folgt.

**12.** Verfahren nach einem der Ansprüche 1 bis 10, **dadurch gekennzeichnet, dass** die Bilder $I_1$ und $I_2$ einer selben digitalen Bildsequenz angehören, und dass das Bild $I_1$ auf $I_2$ in der digitalen Bildsequenz folgt.

**13.** Anwendung des Verfahrens zur Schätzung einer Bewegung nach einem der Ansprüche 1 bis 12 für die Codierung einer digitalen Bildsequenz.

**14.** Verfahren zur Codierung einer digitalen Bildsequenz zur Erzeugung eines binären Zugs, der für die Bildsequenz repräsentativ ist, **dadurch gekennzeichnet, dass** es die folgenden Schritte umfasst:

- Durchführung einer Schätzung einer Vorwärtsbewegung für jedes Paar von aufeinander folgenden Bildern der Sequenz durch Einsatz des Verfahrens zur Schätzung einer Bewegung nach einem der Ansprüche 1 bis 11, und
- Eingabe von Daten in den binären Zug, um das erste Bild der Bildsequenz zu beschreiben, von Daten über die Struktur des verwendeten Maschennetzes für den Schritt der Schätzung der Bewegung, der Verschiebungsvektoren, die nach dem Schritt der Bewegungsschätzung jedes Bildes erhalten wurden, und von Fehlerdaten, um die Fehlerzonen darzustellen, die während des Schrittes der Bewegungsschätzung bestimmt wurden.

15. Verfahren zur Codierung einer digitalen Bildsequenz zur Erzeugung eines binären Zugs, der für die Bildsequenz repräsentativ ist, **dadurch gekennzeichnet, dass** es die folgenden Schritte umfasst:

- Durchführen einer Schätzung einer Rückwärtsbewegung für jedes Paar von aufeinander folgenden Bildern der Sequenz durch Einsatz des Verfahrens zur Bewegungsschätzung nach einem der Ansprüche 1 bis 10 und 12, und
- Eingabe von Daten in den binären Zug, um das erste Bild der Bildsequenz zu beschreiben, von Daten über die Struktur des verwendeten Maschennetzes für den Schritt der Schätzung der Bewegung, der Verschiebungsvektoren, die nach dem Schritt der Bewegungsschätzung jedes Bildes erhalten wurden, und von Fehlerdaten, um die Fehlerzonen darzustellen, die während des Schrittes der Bewegungsschätzung bestimmt wurden.

16. Verfahren zur Codierung einer digitalen Bildsequenz zur Erzeugung eines binären Zugs, der für die Bildsequenz repräsentativ ist, **dadurch gekennzeichnet, dass** es die folgenden Schritte umfasst:

- Durchführen einer Schätzung einer Vorwärtsbewegung und einer Schätzung einer Rückwärtsbewegung für jedes Paar von aufeinander folgenden Bildern der Sequenz durch Einsatz des Verfahrens zur Bewegungsschätzung nach einem der Ansprüche 1 bis 12 für jede der Bewegungsschätzungen, und
- Eingabe von Daten in den binären Zug, um das erste Bild der Bildsequenz zu beschreiben, von Daten über die Struktur des verwendeten Maschennetzes für den Schritt der Schätzung der Bewegung, der Verschiebungsvektoren, die für jedes Bild eine lineare Kombination der nach den beiden vorhergehenden Schritten der Bewegungsschätzung erhaltenen Verschiebungsvektoren sind, und von Fehlerdaten, um die Fehlerzonen darzustellen, die während der beiden Schritte der Bewegungsschätzung bestimmt wurden.

17. Verfahren nach einem der Ansprüche 14 bis 16, **dadurch gekennzeichnet, dass** der binäre Zug ferner ein Erfassungsbit umfasst, das anzeigt, wenn der Schritt der Bewegungsschätzung jedes der Bilder Fehlerzonen im Maschennetz bestimmt hat.

18. Verfahren nach einem der Ansprüche 14 bis 17, **dadurch gekennzeichnet, dass** der Wert der Verschiebungsvektoren, die nach dem Schritt der Bewegungsschätzung erhalten wurden, verändert wird, bevor die Verschiebungsvektoren in den binären Zug eingegeben werden.

19. Verfahren nach Anspruch 18, **dadurch gekennzeichnet, dass** der Wert Null den Verschiebungsvektoren der Knoten der Fehlerzonen zugeteilt wird, und dass der Wert der anderen Verschiebungsvektoren des Modells um eine Einheit inkrementiert wird.

20. Verfahren nach einem der Ansprüche 14 bis 19, **dadurch gekennzeichnet, dass** die in den binären Zug eingegebenen Fehlerdaten durch Anwendung einer diskreten Cosinus-Transformierten am entsprechenden Teil des digitalen Bildes erhalten werden.

21. Verfahren nach einem der Ansprüche 14 bis 19, **dadurch gekennzeichnet, dass** die in den binären Zug eingegebenen Fehlerdaten durch Anwendung einer Wellentransformierten am entsprechenden Teil des digitalen Bildes erhalten werden.

22. Verfahren nach einem der Ansprüche 14 bis 19, **dadurch gekennzeichnet, dass** die in den binären Zug eingegebenen Fehlerdaten durch Anwendung einer Annäherungsmethode durch endliche Elemente am entsprechenden Teil des digitalen Bildes erhalten werden.

23. Verfahren nach einem der Ansprüche 14 bis 19, selbst abhängig von einem der Ansprüche 1 bis 6, **dadurch gekennzeichnet**, das die in den binären Zug eingegebenen Fehlerdaten die Werte der Leuchtdichte, der Chrominanz und eventuell der Position der Knoten der Gesamtheit S sind.

**24.** Verfahren nach Anspruch 23, **dadurch gekennzeichnet, dass** die Werte der Leuchtdichte und der Chrominanz der Knoten der Gesamtheit S optimiert werden, bevor sie in den binären Zug eingegeben werden.

**25.** Verfahren nach Anspruch 24, **dadurch gekennzeichnet, dass** die Werte der Position der Knoten der Gesamtheit S optimiert werden, bevor sie in den binären Zug eingegeben werden.

**26.** Verfahren nach einem der Ansprüche 14 bis 19, selbst abhängig von einem der Ansprüche 7 bis 10, **dadurch gekennzeichnet, dass** die in den binären Zug eingegebenen Fehlerdaten Werte der Leuchtdichte, der Chrominanz und der Position der Knoten der Gesamtheit $S_N$ sind, die sich auf das höchste Maschennetzniveau (N) beziehen.

**27.** Verfahren nach Anspruch 26, **dadurch gekennzeichnet, dass** die Werte der Leuchtdichte und der Chrominanz der Knoten der Gesamtheit $S_N$ optimiert werden, bevor sie in den binären Zug eingegeben werden.

**28.** Verfahren nach Anspruch 27, **dadurch gekennzeichnet, dass** die Werte der Position der Knoten der Gesamtheit $S_N$ optimiert werden, bevor sie in den binären Zug eingegeben werden.

**29.** Verfahren nach Anspruch 27 oder 28, **dadurch gekennzeichnet, dass** die Optimierung der Werte der Leuchtdichte und der Chrominanz der Knoten der Gesamtheit $S_N$, die sich auf das höchste Maschennetzniveau (N) beziehen, nach einem hierarchischen Ansatz erfolgt, wobei zuerst die Werte der Leuchtdichte und der Chrominanz der Knoten der Gesamtheit $S_0$ entsprechend dem gröbsten Maschennetzniveau, dann die Werte der Leuchtdichte und der Chrominanz der Knoten der Zwischengesamtheiten $S_i$ basierend auf den Werten der Leuchtdichte und der Chrominanz der Werte des untersten Maschennetzniveaus $S_{i-1}$ optimiert werden, bis das höchste Maschennetzniveau (N) erreicht ist.

**30.** Verfahren nach Anspruch 29, **dadurch gekennzeichnet, dass** die Optimierung nach einem hierarchischen Ansatz der Werte der Leuchtdichte und der Chrominanz der Gesamtheit $S_N$ erfolgt, indem mit der Optimierung der Werte der Leuchtdichte und der Chrominanz der Knoten der Gesamtheit $S_m$, wobei m>0, begonnen wird.

**31.** Verfahren nach einem der Ansprüche 14 bis 19, selbst abhängig von einem der Ansprüche 7 bis 10, **dadurch gekennzeichnet, dass** die in den binären Zug eingegebenen Fehlerdaten Werte der Leuchtdichte, der Chrominanz und der Position der Knoten der Gesamtheit $S_j$, wobei j≥l, sind, wobei l das Maschennetzniveau ist, auf dem die betreffende Fehlerzone aufgetreten ist.

**32.** Verfahren nach Anspruch 31, **dadurch gekennzeichnet, dass** die Werte der Leuchtdichte und der Chrominanz der Knoten der Gesamtheit $S_j$ optimiert werden, bevor sie in den binären Zug eingegeben werden.

**33.** Verfahren nach Anspruch 32, **dadurch gekennzeichnet, dass** die Werte der Position der Knoten der Gesamtheit $S_j$ optimiert werden, bevor sie in den binären Zug eingegeben werden.

**34.** Verfahren nach Anspruch 32 oder 33, **dadurch gekennzeichnet, dass** die Optimierung der Werte der Leuchtdichte und der Chrominanz der Knoten der Gesamtheit $S_j$ nach einem hierarchischen Ansatz erfolgt, wobei zuerst die Werte der Leuchtdichte und der Chrominanz der Knoten der Gesamtheit $S_0$ entsprechend dem gröbsten Maschennetzniveau, dann die Werte der Leuchtdichte und der Chrominanz der Knoten der Zwischengesamtheiten $S_i$ basierend auf den Werten der Leuchtdichte und der Chrominanz der Werte des untersten Maschennetzniveaus $S_{i-1}$ optimiert werden, bis das Maschennetzniveau j erreicht ist.

**35.** Verfahren nach Anspruch 34, **dadurch gekennzeichnet, dass** die Optimierung nach einem hierarchischen Ansatz der Werte der Leuchtdichte und der Chrominanz der Gesamtheit $S_j$ erfolgt, indem mit der Optimierung der Werte der Leuchtdichte und der Chrominanz der Knoten der Gesamtheit $S_m$, wobei 0<m<j, begonnen wird.

**36.** Verfahren zur Decodierung eines binären Zugs, der für eine Bildsequenz repräsentativ ist und durch das Codierungsverfahren nach einem der Ansprüche 19 bis 35 erzeugt wurde, **dadurch gekennzeichnet, dass** es die folgenden Schritte umfasst:

- Decodieren der Gesamtheit der in den binären Zug eingeschlossenen Daten,
- Bestimmung, ob das Erfassungsbit das Vorhandensein von Fehlerzonen in dem Maschennetz beim Schritt der Bewegungsschätzung der Bilder des Codierverfahrens anzeigt,
- wenn dies der Fall ist, Erfassen der Fehlerzonen über die Verschiebungsvektoren mit dem Wert Null,

- Dekrementieren des Wertes der Verschiebungsvektoren mit dem Wert ungleich Null um eine Einheit, und
- neuerliches Zusammenstellen der Bildsequenz.

FIG.1A

FIG.1B

Définition d'un modèle d'éléments finis initial comportant un maillage et des vecteurs déplacement à chaque nœud du maillage ~ 10

Optimisation globale des valeurs des vecteurs déplacement du modèle ~ 20

Application des vecteurs déplacement au maillage du modèle initial pour générer un maillage déplacé ~ 30

Détermination de zones de défaut dans le maillage déplacé ~ 40

Création d'un ensemble S regroupant les nœuds du maillage contenu dans les zones de défaut ~ 50

Réinitialisation des vecteurs déplacement du modèle initial et réoptimisation de ces vecteurs déplacement du modèle en excluant du modèle les vecteurs déplacement des nœuds de l'ensemble S ~ 60

Vecteurs déplacement optimisés

# FIG.2

FIG.3

Définition d'un modèle d'éléments finis initial comportant un maillage hiérarchique à n+1 niveaux et des vecteurs déplacement à chaque nœud du maillage ～110

Optimisation globale, niveau par niveau, des valeurs des vecteurs déplacement du modèle ～120

Application des vecteurs déplacement au maillage du modèle initial pour générer un maillage déplacé ～130

Détermination de zones de défaut à chaque niveau de maillage i du maillage déplacé ～140

Création d'un ensemble $S_i$ pour chaque niveau de maillage i regroupant les nœuds du niveau de maillage i contenus dans les zones de défaut ～150

Réinitialisation des vecteurs déplacement du modèle initial et réoptimisation niveau par niveau des vecteurs déplacement du modèle en excluant, à chaque niveau de maillage i, les vecteurs déplacement des nœuds de l'ensemble $S_i$ ～160

Vecteurs déplacement optimisés

## FIG.4